Europäisches Patentamt

(19) European Patent Office

Office européen des brevets

(11) Numéro de publication: **0 186 581**
**B1**

(12) **FASCICULE DE BREVET EUROPÉEN**

(45) Date de publication du fascicule du brevet:
16.03.88

(21) Numéro de dépôt: **85402509.5**

(22) Date de dépôt: **16.12.85**

(51) Int. Cl.⁴: **F 01 P 5/02,** B 60 H 1/00,
H 02 K 5/22

(54) **Motoventilateur, notamment pour véhicule automobile, fixé sur des bras supports solidaires de la carrosserie.**

(30) Priorité: 17.12.84 FR 8419289

(43) Date de publication de la demande:
02.07.86 Bulletin 86/27

(45) Mention de la délivrance du brevet:
16.03.88 Bulletin 88/11

(84) Etats contractants désignés:
DE GB IT

(56) Documents cité:
EP-A-0 065 588
DE-A-2 936 290
FR-A-2 454 921
GB-A-2 002 182
US-A-3 671 095

(73) Titulaire: **ACIERS ET OUTILLAGE PEUGEOT
Société dite:, F-25400 Audincourt (Doubs) (FR)**

(72) Inventeur: **Maurice, Alain, 3 rue des Prés Voulus,
F-25600 Vieux Charmont (FR)**
Inventeur: **Clement, Pierre, 44 B rue de
Montbéliard, F-25150 Pont- de- Roide (FR)**

(74) Mandataire: **Bressand, Georges, c/o CABINET
LAVOIX 2 Place d'Estienne d'Orves, F-75441
Paris Cedex 09 (FR)**

## Description

La présente invention concerne un motoventilateur, notamment pour véhiculee automobile.

Un des problèmes rencontrés avec les motoventilateurs connus réside dans le montage de celui-ci sur des pièces solidaires de la carrosserie, ce montage étant compliqué, et donc difficilement automatisable. En effet, en plus de l'assemblage mécanique, il est nécessaire de réaliser une connexion électrique entre le moteur du motoventilateur et une source de tension. Pour les dispositifs connus (p.e. FR-A-2 454 921), il est nécessaire d'effectuer ces étapes séparément, et la connexion électrique doit se faire manuellement du fait qu'elle présente un axe de montage différent de celui du motoventilateur sur la carrosserie.

Un but de l'invention est de réaliser un motoventilateur pour lequel l'assemblage sur la carrosserie et le raccordement électrique puissent être effectués simultanement suivant une direction unique.

L'invention à donc pour objet un motoventilateur, notamment pour véhiculee automobile, constitué d'une hélice fixée sur l'arbre d'un moteur électrique, le moteur étant fixé sur les bras supports radiaux dont les extrémités extérieures sont fixées à un bâti entourant le moteur électrique et l'hélice, caractérisé en ce que des fils électriques relient le moteur électrique à un connecteur électrique, dont une première partie est solidaire du bâti et une deuxième partie est fixée à une pièce solidaire de la carrosserie, suivant l'axe d'un des bras supports, la première partie du connecteur étant à proximité de l'extrémité de ce bras support et en ce que l'axe de raccordement des deux parties du connecteur est parallèle à la direction de montage du motoventilateur sur les pièces solidaires de la carrosserie et en ce que la deuxième partie du connecteur est maintenue élastiquement, dans un boîtier fixé sur les pièces solidaires de la carrosserie, par des organes élastiques disposés entre les parois latérales de cette deuxième partie et la paroi intérieure du boîtier et présentant une grande rigidité aux efforts selon la direction de montage et une capacité de déformation dans un plan perpendiculaire à cette direction de montage.

De plus un autre inconvénient rencontré dans des motoventilateurs du type precité est du à la conception de la forme des bras supports dans leur partie traversant le flux d'air engendré par l'hélice. En effet, les bras supports sont généralement conçus pour avoir un comportement aéraulique engendrant un bruit aéraulique et une perte de charge minimum. Mais ce comportement se dégrade du fait que les fils de connexion du moteur électrique sont fixés le long d'un des bras supports par des colliers, clips, ligatures ou autres.

Suivant une autre caractéristique de l'invention, au moins un des bras supports du motoventilateur est creux de manière à constituer une gaine pour les fils électriques passant à l'intérieur de celui-ci à partir du moteur éléctrique jusqu'à une ouverture située à proximité de l'extrémité de ce bras support et sont reliés à la première partie du connecteur électrique.

L'invention sera mieux comprise à l'aide de la description qui va suivre, donnée uniquement à titre d'exemple et faite en se referant aux dessins annexés sur lesquels:

- la Fig. 1 est une vue de dessous partiellement coupée d'un motoventilateur selon l'invention fixé sur la carrosserie d'un véhiculee:

- la Fig. 2 est une vue en perspective d'un connecteur électrique utilisé dans un motoventilateur selon l'invention;

- la Fig. 3 est une vue en coupe suivant la ligne A-A de la Fig. 1, d'un exemple de moyens de fixation du bâti et des bras supports d'un motoventilateur selon l'invention.

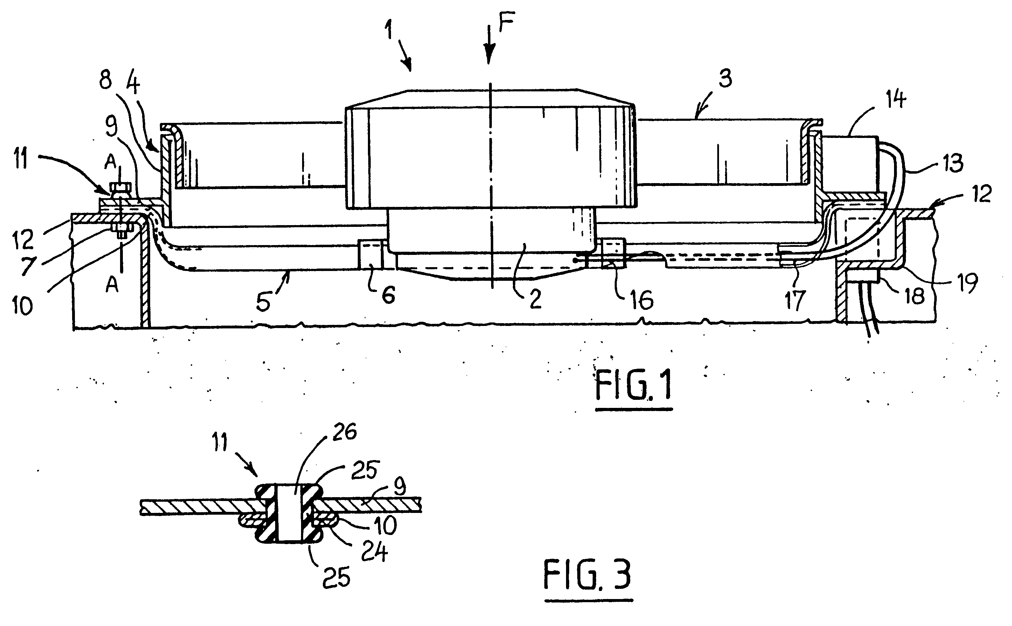

La Fig. 1 représente un motoventilateur 1 comportant un moteur électrique 2 sur l'arbre (non représente) duquel est fixée une hélice 3, un bâti 4 entourant le moteur et l'hélice est rendu solidaire du moteur par l'intermédiaire de bras supports 5 s'étendant sensiblement radialement par rapport à l'axe de rotation de l'hélice. Les bras supports 5 sont fixés au bâti 4, et au moteur électrique par l'intermédiaire de pattes de fixation 6 de ce dernier, le tout étant fixé à la carrosserie par l'intermédiaire de moyens de fixation 7 du type vis-écrou ou analogue.

Le bâti 4 comprend une paroi circulaire 8 parallèle à l'axe de rotation de l'hélice 3 de manière à entourer les pales de l'hélice et une collerette 9 venue de matière avec la paroi 8 et à peu près perpendiculaire à celle-ci, et s'étendant vers l'extérieur de cette paroi.

Les bras supports ont une forme à peu près cylindrique et leurs extrémités 10 sont aplaties et pliées de manière à venir en contact avec une partie de la surface extérieure de la paroi 8 et la surface inférieure de la collerette 9. Les extrémités aplaties 10 sont fixées à la collerette 9 par des moyens de fixation 11, qui seront décrits en référence à la Fig. 3, mais peuvent également être soudées ou collées à cette collerette.

Les pattes de fixation 6 sont venues de matière avec le moteur 2 et sont roulées de manière à entourer partiellement le bras support correspondant. Il est possible de renforcer cette fixation par un marquage dans la patte et le bras support en fin de roulage ou tout autre moyen connu.

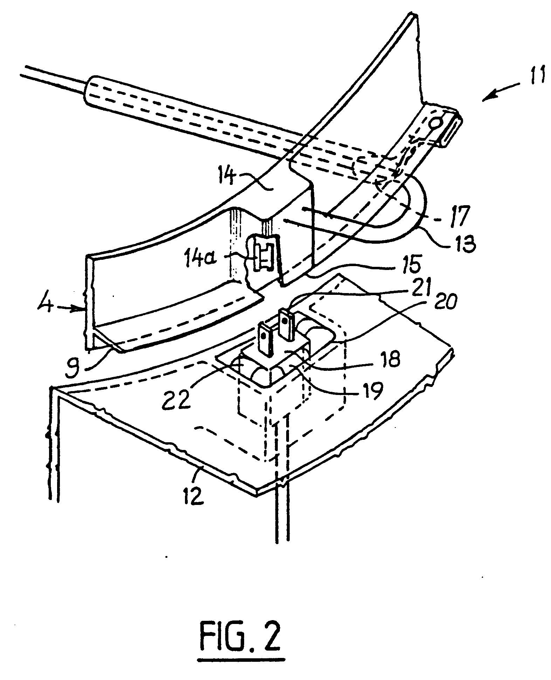

Le motoventilateur 1 est monté fixé sur des pièces 12 en forme d'equerre et solidaires de la carrosserie, par l'intermédiaire des extrémités 10 des bras supports fixées à la collerette 9, le montage s'effectuant suivant la direction F. Des fils conducteurs 13 d'alimentation du moteur électrique 2 relient celui-ci à une première partie 14 d'un connecteur électrique fixée sur le bâti 4 au-dessus de la collerette qui comporte une découpe 15 de manière à ce que les éléments de connexion 14A de cette partie du connecteur soient accessibles. Cette partie du connecteur peut également être venue de matière avec le bâti 4 comme représenté sur la Fig. 2. Sur les Fig. 1 et 2, on peut voir que, dans ce mode de realisation preféré, les fils conducteurs 13 passent à l'intérieur d'un des bras supports comportant un orifice 16 à proximité du moteur 2 et une ouverture 17 située juste avant l'extrémité pliée et aplatie 10 de manière laisser passer les fils conducteurs 13. De cette manière les bras supports 5 peuvent avoir une forme aérodynamique sans que l'existence des fils conducteurs nuisent à leur fonction.

Comme représenté plus en detail sur la Fig. 2 une deuxième partie 18 du connecteur électrique est logée dans un boîtier 19 fixé sous la pièce 12 solidaire de la carrosserie en regard de la première partie 14, la pièce 12 présentant une decoupe 20 de manière à laiser passer les éléments de connexion 21 de la deuxième partie du connecteur.

Les éléments de connexion des deux parties sont orientés de telle manière que leur raccordement s'effectué suivant la direction F du montage du motoventilateur sur les pièces 12. Dans ce mode de réalisation préféré, la deuxième partie du connecteur 18 est sollicitée élastiquement par quatre organes élastiques 22 disposés entre ses parois latérales et la paroi intérieure du boîtier 19. Ces organes élastiques présentent une grande rigidité aux efforts exercés sur la deuxième partie 18 suivant la direction F et une certaine capacité de déformation dans un plan perpendiculaire à cette direction de manière à obtenir un auto-positionnement des éléments de connexion lors de leur raccordement. Les organes élastiques 12 sont constitués par des languettes déformables, des organes en élastomere, des ressorts ou similaires.

La Fig. 3 représente un mode de réalisation des moyens de fixation 11 du bâti 4 avec les bras supports 5. Des alésages 23 sont realisés dans la collerette 9 et les extrémités aplaties 10 des bras supports, ces alésages étant de diamètres à peu près identiques, et alignés lors de l'assemblage des bras supports sous le moteur électrique 2. Une pièce élastique 24, par exemple en élastomere, de forme générale cylindrique est munie d'une tête creuse 25 à chacune de ses extrémités. Le diamètre de sa partie centrale et de ses extrémités et sa longueur sont tels que son introduction par forçage dans les alésages alignés 23 permet la fixation du bâti avec les bras supports. De plus, l'évidement central 26 de la pièce 24, d'axe parallèle à la direction F, permet le passage des moyens de fixation du motoventilateur sur les pièces solidaires de la carrosserie qui comportent des alésages appropriés.

Avec un tel agencement, l'assemblage du motoventilateur sur la carrosserie et le raccordement électrique du moteur électrique se font en une seule manoeuvre suivant la direction F et le maintien en place de l'ensemble est assuré par les moyens de fixation 7. Cet assemblage est ainsi facilement automatisable.

**Revendications**

1. Motoventilateur, notamment pour véhicule automobile, constitué d'une hélice (3) fixée sur l'arbre d'un moteur électrique (2), le moteur étant fixé sur des bras supports radiaux (5) dont les extrémités extérieures (10) sont fixées par des moyens de fixation (11) à un bâti (4) entourant le moteur électrique et l'hélice, caractérisé en ce que des fils conducteurs (13) relient le moteur électrique à un connecteur électrique, dont une première partie (14) est solidaire du bâti et une deuxième partie (18) est fixée à une pièce (12) solidaire de la carrosserie, suivant l'axe d'un des bras support, la première partie du connecteur étant à proximité de l'extrémité (10) de ce bras support (5), en ce que l'axe de raccordement des deux parties (14, 18) du connecteur est parallèle à la direction de montage (F) du motoventilateur sur les pièces (12) solidaires de la carrosserie et en ce que la deuxième partie (18) du connecteur est maintenue élastiquement, dans un boîtier (19) fixé sur les pièces (12) solidaires de la carrosserie, par des organes élastiques disposés entre les parois latérales de cette deuxième partie et la paroi intérieure du boîtier et présentant une grande rigidité aux efforts selon la direction de montage (F) et une capacité de deformation dans un plan perpendiculaire à cette direction de montage (F).

2. Motoventilateur selon la revendication 1, caractérisé en ce qu'au moins un des bras supports (5) du motoventilateur est creux de manière à constituer une gaine pour les fils conducteurs (13) passant à l'intérieur de ce bras à partir du moteur électrique jusqu'à une ouverture (17) située à proximité de l'extrémité de ce bras support et étant rélies à la première partie (14) du connecteur électrique.

3. Motoventilateur selon l'une quelconque des revendications precédentes, caractérisé en ce que les moyens de fixation (11) sont constitués par des organes élastiques cylindriques (24) munis chacun, à chacune de ses extrémités, d'une tête creuse (25), et les dimensions de ces organes étant telles que leur introduction par forçage dans des alésages alignés (23) du bâti et des bras supports permettent la fixation de ces derniers, l'évidement central (26) de ces organes permettant le passage des moyens de fixation (7) du motoventilateur sur les pièces (12).

4. Motoventilateur selon l'une quelconque des revendications précédentes, caractérisé en ce que la première partie (14) du connecteur porte les éléments femelles (14a) et la deuxième partie (18) du connecteur porte les éléments mâles (21).

**Patentansprüche**

1. Motorventilator, insbesondere für Kraftfahrzeuge, mit einem auf der Welle eines Elektromotors (2) gehaltenen Lüfterrad (3), wobei der Elektromotor an radialen Tragarmen (5) gehalten ist, deren äußere Enden (10) mit Befestigungsmitteln (11) an einem den Elektromotor und das Lüfterrad umgebenden Gehäuse (4) gehalten sind,

**dadurch gekennzeichnet,**
daß Leitungsdrähte (13) den Elektromotor entlang der Achse eines Tragarmes mit einem elektrischen Steckverbinder verbinden, dessen erster Teil (14) mit dem Gehäuse verbunden und dessen zweiter Teil (18) an einem mit der Karosserie verbundenen Teil gehalten ist, wobei der erste Teil des Steckverbinders in der Nähe des Endes (10) dieses Tragarmes angeordnet ist, daß die Zusammensteckachse der beiden Teile (14, 18) des Steckverbinders parallel zur Richtung (F) verläuft, in der der Motorventilator an den mit der Karosserie verbundenen Teilen montiert wird, und daß der zweite Teil (18) des Steckverbinders mittels elastischer Organe in einem an den mit der Karosserie verbundenen Teilen (12) gehaltenen Gehäuse (19) gelagert ist, wobei die elastischen Organe zwischen den Seitenwänden des zweiten Teils und der Innenwand des Gehäuses angeordnet sind und eine große Steifigkeit bei Beaufschlagung in der Montagerichtung (F) aufweisen, in einer zur Montagerichtung (F) senkrechten Ebene dagegen verformbar sind.

2. Motorventilator nach Anspruch 1, dadurch gekennzeichnet, daß mindestens einer der Tragarme (5) des Motorventilators hohl ist und eine Ummantelung für die Leitungsdrähte (13) bildet, die im Innern dieses Armes vom Elektromotor bis zu einer Öffnung (17) verlaufen, die in der Nähe des Endes dieses Stützarmes angeordnet ist, und die mit dem ersten Teil (14) des elektrischen Steckverbinders verbunden sind.

3. Motorventilator nach einem der voranstehenden Ansprüche, dadurch gekennzeichnet, daß die Befestigungsmittel (11) durch elastische, zylindrische Elemente (24) gebildet werden, von denen jedes an beiden Enden einen hohlen Kopf (25) aufweist, daß die Abmessungen der Elemente so gewählt sind, daß sie in miteinander ausgerichtete Bohrungen (23) des Gehäuses und der Stützarme eingedrückt werden können und dadurch die Festlegung der letzteren ermöglichen, und daß der zentrale Hohlraum (26) der Elemente das Einstecken von Befestigungsgliedern (7) ermöglicht, die den Motorventilator an den Teilen (12) festlegen.

4. Motorventilator nach einem der voranstehenden Ansprüche, dadurch gekennzeichnet, daß der erste Teil (14) des Steckverbinders Buchsen (14a) und der zweite Teil (18) des Steckverbinders Stecker (21) aufweist.

## Claims

1. A motor-driven fan, particularly for a motor vehicle, consisting of an impeller (3) fixed to the shaft of an electric motor (2), the motor being fixed to radial supporting arms (5), the outer ends (10) of which are fixed by attachment means (11) to a frame (4) surrounding the electric motor and the impeller, characterised in that conducting wires (13) connect the electric motor to an electrical connector of which a first portion (14) is rigidly connected to the frame and a second portion (18) is fixed to a member (12) rigidly connected to the car body, along the axis of one of the supporting arms, the first portion of the connector being close to the end (10) of this supporting arm (5), and in that the axis connecting the two portions (14, 18) of the connector is parallel to the direction of mounting (F) of the motor-driven fan on the members (12) rigidly connected to the car body and in that the second portion (18) of the connector is held resiliently, in a casing (19) fixed to the members (12) rigidly connected to the car body, by resilient members disposed between the lateral walls of this second portion and the internal wall of the casing and having a great resistance to stresses in the direction of mounting (F) and a capacity for deformation in a plane perpendicular to this direction of mounting (F).

2. A motor-driven fan according to Claim 1, characterised in that at least one of the supporting arms (5) of the motor-driven fan is hollow in such a manner as to constitute a sheath for the conducting wires (13) passing through the interior of this arm from the electric motor to an aperture (17) situated close to the end of this supporting arm and being connected to the first portion (14) of the electrical connector.

3. A motor-driven fan according to either one of the preceding Claims, characterised in that the attachment means (11) consist of cylindrical resilient members (24), each equipped, at each of its ends, with a hollow head (25) and the dimensions of these members being such that their introduction by forcing into aligned bores (23) in the frame and in the supporting arms permits the fixing of the latter, the central cavity (26) in these members permitting the passage of the means (7) for fixing the motor-driven fan on the members (12).

4. A motor-driven fan according to any one of the preceding Claims, characterised in that the first portion (14) of the connector carries the female elements (14a) and the second portion (18) of the connector carries the male elements (21).

FIG. 1

FIG. 3

0 186 581

## FIG. 2